# EUROPEAN PATENT APPLICATION

(11) **EP 2 112 236 A1**
(43) Date of publication of application: **28.10.2009**
(21) Application number: 08703649.7
(22) Date of filing: 22.01.2008
(51) Int. Cl.: C21B 13/10, C22B 5/10, F27B 9/16, F27B 9/36

(54) **ROTARY HEARTH REDUCING FURNACE AND METHOD OF OPERATING THE SAME**

(30) Priority: 08.02.2007 JP 2007029502
(71) Applicant: Nippon Steel Engineering Co., Ltd, Tokyo 100-8071 (JP)
(72) Inventor: SHIMA, Shinji, Kitakyushu-shi Fukuoka 804-8585 (JP)
(74) Representative: Vossius & Partner
(86) International application number: PCT/JP2008/050805
(87) International publication number: WO 2008/096592

(57) **Abstract**

A combustion method of a rotary hearth reducing furnace for suppressing the generation of nitrogen oxides in the rotary hearth reducing furnace to significantly reduce the emission amount is provided.

In the rotary hearth reducing furnace of counterflow heating type, a metal oxide and a reducing agent charged thereinto are heated and reduced with burners arranged in a heat combustion area and a reduction combustion area. The reduction combustion area in which the theoretical air-fuel ratio produced by the total combustion device is less than 0. 98 occupies at least 15% of the entire combustion space, and the oxygen concentration in a combustion exhaust gas at a exhaust gas outlet portion of the furnace is 5% or less.

## Description

### TECHNICAL FIELD

The present invention relates to a rotary hearth reducing furnace for manufacturing mainly reduced iron from a raw material such as iron ore or steel-making dust and to a operating method thereof.

### BACKGROUND ART

To recycle iron oxide contained in steel-making dust, fine ore, and the like, these materials are kneaded with a reducing agent and a binder, and the mixture is granulated to form agglomerates. The agglomerates are charged into a rotary hearth reducing furnace and heated and reduced to produce reduced agglomerates.

The rotary hearth reducing furnace is used to heat and reduce the agglomerates with a high-temperature counterflowing combustion gas obtained by burning fuel and combustion air injected into the furnace.

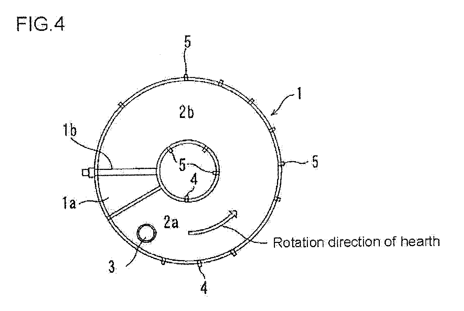

Fig. 4 is a schematic view of a rotary hearth reducing furnace. The reducing furnace 1 is composed of a charging device 1a for charging the above agglomerates into the furnace, a combustion space 2a, 2b for heating and reducing the charged agglomerates with a high-temperature combustion gas, and a discharge device 1b for discharging the heated agglomerates to the outside of the furnace. The combustion space includes a heat combustion area 2a located close to the feeding device 1a and a reduction combustion area 2b located close to the discharge device 1b. The heat combustion area 2a and the reduction combustion area 2b are provided with burners 4 and 5 arranged in the side walls of the reducing furnace 1. The rotation of the rotary hearth causes the charged agglomerates to pass from the heat combustion area 2a through the reduction combustion area 2b so that the agglomerates are heated and reduced, thereby producing reduced iron.

The agglomerates charged into the heat combustion area 2a are heated with the burners 4 to initiate reduction, and a gas containing carbon dioxide as a main component is generated. Then, the reduction of the agglomerates proceeds, and a reducing gas containing carbon monoxide as a main component is generated when the agglomerates are moved to the reduction combustion area 2b. Therefore, in the reduction combustion area 2b of the rotary hearth reducing furnace, the reducing gas generated from the agglomerates, in addition to the fuel supplied from the burners 5, also serves as a fuel for combustion.

In the reducing furnace 1, since the heat combustion area 2a and the reduction combustion area 2b are continuous with each other, the gas generated in, or injected into, the reduction combustion area 2b passes through the heat combustion area 2a and is exhausted to a exhaust gas outlet 3. Therefore, a sufficient amount of air is fed into the heat combustion area 2a to combust the reducing gas flowing from the reduction combustion area 2b so that the combustion heat can be utilized.

For example, Patent Document 1 discloses a method for controlling combustion in a rotary hearth reducing furnace. In this combustion method, the concentration of O₂ or CO in a furnace gas in a heat combustion area is measured, and air is fed into the heat combustion area according to the measured concentration to combust, in the heat combustion area, unburnt gas generated in a reduction combustion area.
[Patent Document 1] Japanese Patent Application Laid-Open No. Hei 11-248359.

### DISCLOSURE OF THE INVENTION

### PROBLEMS TO BE SOLVED BY THE INVENTION

In a rotary hearth reducing furnace, the most part of the combustion area serves as a reducing atmosphere furnace due to the influence of carbon monoxide generated in the course of reduction of agglomerates. In principle, nitrogen oxides are less likely to be generated in such a rotary hearth reducing furnace when compared with the case of a general industrial heating furnace. However, in practice, since the temperature inside the furnace is 1,000°C or higher, a considerable amount of nitrogen oxides is generated when the fuel and air injected from a combustion device are combusted, and the generated nitrogen oxides are exhausted to the outside of the furnace. However, in a conventional rotary hearth reducing furnace, since the amount of generated nitrogen oxides is comparable to or less than that in a general industrial furnace, no special measures have been taken.

In such a rotary hearth reducing furnace, however, an excessively large amount of nitrogen oxides can be generated under the following conditions.

(1) Although combustion is conducted in a reducing atmosphere, if in a high temperature range an excessive amount of combustion air is supplied to the fuel supplied to the combustion device, an excess amount of oxygen is locally generated in a flame portion or other portions, and nitrogen oxides are thereby generated.

(2) When a rare unburnt gas is combusted with the combustion air, if an excessively larger amount of air is supplied, the oxidation degree of the combustion gas increases, and nitrogen oxides are thereby generated.

(3) When a rare unburnt gas is combusted with the combustion air, if combustion is conducted in a narrow space, the temperature increases locally, and nitrogen oxides are thereby generated.

(4) The higher the temperature under combustion in a reducing atmosphere, the greater the amount of generated nitrogen oxides.

Accordingly, the present invention provides a combustion method for a rotary hearth reducing furnace. In this method, measures are taken to relax the above conditions, so that the generation of nitrogen oxides in the rotary hearth reducing furnace is suppressed to significantly reduce the amount of exhaust.

### MEANS FOR SOLVING THE PROBLEMS

The present invention provides a counterflow heating type rotary hearth reducing furnace in which a metal oxide and a reducing agent charged thereinto are heated and reduced with burners arranged in a heat combustion area and a reduction combustion area. The rotary hearth reducing furnace is configured such that a reduction combustion area in which the theoretical air-fuel ratio of a combustion device is less than 0.98 occupies at least 15% of an entire combustion space, and an oxygen concentration in a combustion exhaust gas at a exhaust gas outlet portion of the furnace is 5% or less.

Alternatively, the rotary hearth reducing furnace is configured such the reduction combustion area in which the theoretical air-fuel ratio of the combustion device is less than 0.96 occupies at least 10% of an entire combustion space, and the oxygen concentration in a combustion exhaust gas at the exhaust gas outlet portion of the furnace is 5% or less.

In the above configurations, reduction combustion which is obtained when the ratio between the amounts of the combustion air and fuel injected from the combustion device is less than a theoretical complete combustion ratio is attained even in an area in which oxidation combustion is conventionally considered to be sufficient since a strong reducing atmosphere is obtained. Therefore, no excess oxygen is locally generated so that the amounts of generation and emission of nitrogen oxides can be significantly reduced. Moreover, when an excess unburnt gas remaining in the furnace after reduction combustion is combusted to effectively utilize the fuel, an excessively large amount of oxygen for combustion is not supplied. In this manner, the oxidation degree of the combustion exhaust gas is suppressed to a low level, so that the amount of generated nitrogen oxides can be significantly reduced.

In the present invention, an unburnt gas remaining in the furnace is completely combusted in a complete combustion area. Only air is injected into the complete combustion area, or a theoretical air-fuel ratio produced by the combustion device arranged in the complete combustion area is 1.2 or more, and a volume of the complete combustion area is at least 10% of the entire combustion space. In this configuration, when an excess unburnt gas remaining in the furnace after reduction combustion is combusted to effectively utilize the fuel, a sufficient combustion space can be ensured. Therefore, the temperature does not increase locally, so that the generation of nitrogen oxides can be reduced.

To prevent an excessive increase in temperature, an average temperature in the reduction combustion area is less than 1350°C. In this manner, the generation of nitrogen oxides can be suppressed.

### EFFECTS OF THE INVENTION

According to the present invention, the generation of harmful nitrogen oxides in the rotary hearth reducing furnace can be suppressed, and the amount of discharged nitrogen oxides can thereby be reduced significantly. Therefore, an expensive exhaust gas denitrizer is not required.

### BRIEF DESCRIPTION OF THE DRAWINGS

Fig. 1 illustrates a rotary hearth reducing furnace according to the present invention.
Fig. 2 is a graph showing the changes in the amounts of CO and CO₂ generated from raw materials within the entire combustion space in the furnace.
Fig. 3 is a graph showing the relationship between the average air-fuel ratio in a reduction area and the ratio of the volume of a reduction combustion area to the entire combustion space.
Fig. 4 is a schematic diagram of a rotary hearth reducing furnace.

### DESCRIPTION OF REFERENCE NUMERALS

- 1:: rotary hearth reducing furnace
- 1a:: charging device
- 1b:: discharge device
- 2a:: heat combustion area
- 2b:: reduction combustion area
- 3:: exhaust gas outlet
- 4:: burner
- 5:: burner

### BEST MODE FOR CARRYING OUT THE INVENTION

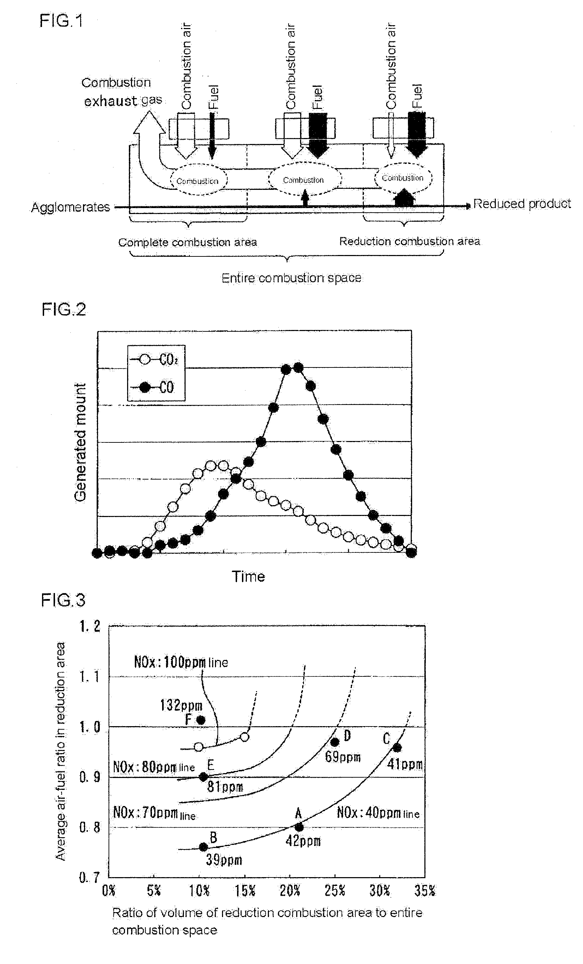

Fig. 1 illustrates a rotary hearth reducing furnace according to the present invention. For convenience of description, the rotary hearth reducing furnace is drawn as a linearly developed view.

The configuration of the rotary hearth reducing furnace used in the present invention is the same as that of the conventional rotary hearth reducing furnace shown in Fig. 4. A metal oxide and a reducing agent are mixed and granulated, and the granulated agglomerates are charged into the furnace through the charging device. The agglomerates are heated in the heat combustion area while the rotary hearth is rotated. The heated agglomerates are subjected to final reduction in the reduction combustion area and then discharged as a reduced product to the outside of the furnace by the discharge device. Each of the heat combustion area and the reduction combustion area is provided with, as a combustion device, a burner or an air nozzle arranged in the side wall of the reducing furnace. The reducing gas generated in the reduction combustion area flows in a direction opposite to the rotation direction of the agglomerates, passes through the heat combustion area, and is exhausted from the exhaust gas outlet. The fuel and the combustion air are supplied to the combustion devices arranged in the side wall and are then combusted.

### [Example 1]

Table 1 shows examples of the present invention.

**[Table 1]**

| | A | B | C | D | E | F |
|---|---|---|---|---|---|---|
| Ratio of reduction combustion area (volume ratio) | 21% | 10.5% | 32% | 25% | 10.50% | 10,50% |
| Air-fuel in reduction combustion area | 0.8 | 0.76 | 0.96 | 0.97 | 0.9 | 1.02 |
| Average temperature in reduction combustion area | 1260 | 1290 | 1280 | 1180 | 1320 | 1280 |
| Ratio of complete combustion area (volume ratio) | 0.29 | 0.15 | 0.32 | 0.25 | 0.15 | 15% |
| Air-fuel in complete combustion area | ∞ | 1.72 | ∞ | ∞ | 1.25 | 2.0 |
| NOx ppm in exhaust gas (converted to a value at O₂=15%) | 42 | 39 | 41 | 69 | 81 | 132 |
| Oxygen concentration in combustion exhaust gas | 2.0% | 4.5% | 3.0% | 4.8% | 2.0% | 4.0% |

Fig. 2 is a graph showing the changes in the amounts of CO and CO₂ generated from raw materials within the entire combustion space in the furnace.

In the heat combustion area (the left side in the figure), CO flowing from the reduction combustion area is combusted to be gradually decreased in amount. Then, the completely combusted gas is exhausted from the exhaust gas outlet. The reduction combustion area subsequent to the heat combustion area contains generated CO being gradually increased in amount, and becomes a reducing atmosphere. The amounts of CO and CO₂ generated from the raw materials decrease in the end.

Table 1 shows data of the amounts of exhausted nitrogen oxides measured under different operating conditions. The measurement was performed under the operating conditions of a reduction combustion area temperature of less than 1350°C and an oxygen concentration in a exhaust gas of 5% or less.

Fig. 3 is a graph showing the data organized by the relationship between the average air-fuel ratio in the reduction area and the ratio of the volume of the reduction combustion space to the volume of the entire combustion space. The data points A to F plotted in Fig. 3 show that the higher the ratio of the volume of the reduction combustion area and the lower the theoretical air-fuel ratio of the combustion device arranged in the reduction combustion area, the lower the amount of exhausted nitrogen oxides and that the degrees of the changes have some relation.

The guideline value for the suppression of nitrogen oxides, which relates to the problem to be solved by the invention, was set to the same value as the NOx emission limit for blast furnaces, which are typical facilities for producing reduced iron like the rotary hearth reducing furnace. More specifically, the guideline value for the amount of exhausted nitrogen oxides is 100 ppm at a residual oxygen concentration of 15%.

In the relationship between the average air-fuel ratio in the reduction area and the ratio of the volume of the reduction combustion space to the volume of the entire combustion space, the conditions giving a nitrogen oxide concentration of 100 ppm can be easily determined from Fig. 3.

In the present invention, the conditions giving a nitrogen oxide concentration of 100 ppm and determined from Fig. 3 are represented by the following ranges that: The reduction combustion area in which the theoretical air-fuel ratio produced by the total combustion device is less than 0.98 occupies at least 15% of the entire combustion space, and the oxygen concentration in the combustion exhaust gas at the exhaust gas outlet portion of the furnace is 5% or less; and the reduction combustion area in which the theoretical air-fuel ratio produced by the total combustion device is less than 0.96 occupies at least 10% of the entire combustion space.

To prevent an excessive increase in the temperature in the reduction combustion area, the average temperature in the reduction combustion area is set to less than 1350°C.

Moreover, as shown in Table 1, the unburnt gas remaining in the future is completely combusted in the complete combustion area in which only air is injected or the theoretical air-fuel ratio produced by the total combustion device is 1.2 or more, and the complete combustion area occupies at least 10 % of the entire combustion space. In this manner, when the excess unburnt gas remaining in the furnace after reduction combustion is combusted to effectively use the fuel, a sufficient combustion space can be ensured, so that the generation of nitrogen oxides can be suppressed.

## Claims

1. A rotary hearth reducing furnace of counterflow heating type for heating and reducing a metal oxide using a reducing agent charged thereinto with burners arranged in a heat combustion area and a reduction combustion area, wherein
the reduction combustion area in which a theoretical air-fuel ratio produced by the total combustion device is less than 0.98 occupies at least 15% of the entire combustion space, and an oxygen concentration in a combustion exhaust gas at a exhaust gas outlet portion of the furnace is 5% or less.

2. A rotary hearth reducing furnace of counterflow heating type for heating and reducing a metal oxide using a reducing agent charged thereinto with burners arranged in a heat combustion area and a reduction combustion area, wherein
the reduction combustion area in which a theoretical air-fuel ratio produced by the total combustion device is less than 0.96 occupies at least 10% of the entire combustion space, and an oxygen concentration in a combustion exhaust gas at a exhaust gas outlet portion of the furnace is 5% or less.

3. The rotary hearth reducing furnace of counterflow heating type according to claim 1 or 2, wherein the unburnt gas remaining in the future is completely combusted in the complete combustion area in which only air is injected or the theoretical air-fuel ratio produced by the total combustion device is 1.2 or more, and the complete combustion area occupies at least 10 % of the entire combustion space.

4. The rotary hearth reducing furnace of counterflow heating type according to any of claims 1 to 3, wherein an average temperature in the reduction combustion area is less than 1350°C.

5. An operation method of a rotary hearth reducing furnace of counterflow heating type for heating and reducing a metal oxide using a reducing agent charged thereinto with burners arranged in a heat combustion area and a reduction combustion area, the method being **characterized in that** the reduction combustion area in which a theoretical air-fuel ratio produced by the total combustion device is less than 0.98 occupies at least 15% of the entire combustion space, and **in that** the burners are operated for combustion such that an oxygen concentration in a combustion exhaust gas at a exhaust gas outlet portion of the furnace is 5% or less.
